(19) Europäisches Patentamt / European Patent Office / Office européen des brevets

(11) **EP 2 653 203 B1**

(12) **FASCICULE DE BREVET EUROPEEN**

(45) Date de publication et mention de la délivrance du brevet:
**03.03.2021 Bulletin 2021/09**

(51) Int Cl.:
***B01D 3/00*** *(2006.01)*

(21) Numéro de dépôt: **13305456.9**

(22) Date de dépôt: **09.04.2013**

(54) **Plateau distributeur pour colonne de contact gaz/liquide offshore**

Verteilungsplattform für Offshore-Gas-/Flüssigkeitskontaktsäule

Dispenser tray for an offshore gas/liquid contact column

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.04.2012 FR 1201143**

(43) Date de publication de la demande:
**23.10.2013 Bulletin 2013/43**

(73) Titulaire: **IFP Energies nouvelles
92500 Rueil-Malmaison (FR)**

(72) Inventeurs:
• **Haroun, Yacine
69520 Grigny (FR)**
• **Raynal, Ludovic
69600 Oullins (FR)**
• **Alix, Pascal
38150 Roussillon (FR)**

(74) Mandataire: **IFP Energies nouvelles
Département Propriété Industrielle
Rond Point de l'échangeur de Solaize
BP3
69360 Solaize (FR)**

(56) Documents cités:
| | |
|---|---|
| **FR-A- 928 201** | **FR-A1- 2 352 572** |
| **FR-A1- 2 771 018** | **FR-A1- 2 771 019** |
| **US-A- 1 811 247** | **US-A- 2 926 754** |
| **US-A- 2 944 009** | **US-A- 3 524 731** |
| **US-A- 5 752 538** | **US-A- 6 149 136** |

EP 2 653 203 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine des colonnes de contact gaz/liquide offshore, et plus particulièrement les unités offshore de traitement de gaz, de captage du $CO_2$, de déshydratation ou encore de distillation.

Les unités offshores de traitement de gaz et/ou de captage du $CO_2$ par lavage aux amines comprennent des colonnes d'absorption et de régénération de fluides, liquide ou gazeux. Ces dernières fonctionnent en écoulement gaz/liquide à contre courant où à co-courant et sont installées sur des bateaux, des barges flottantes ou des plateformes offshore, par exemple de type FPSO (de l'anglais Floating Production, Storage and Offloading qui signifie plateforme de production de stockage et de déchargement), ou du type FLNG (de l'anglais Floating Liquefied Natural Gas qui signifie plateforme de gaz naturel liquéfié). Sur les barges flottantes, sont installées également des colonnes de distillation ou des colonnes de déshydratation.

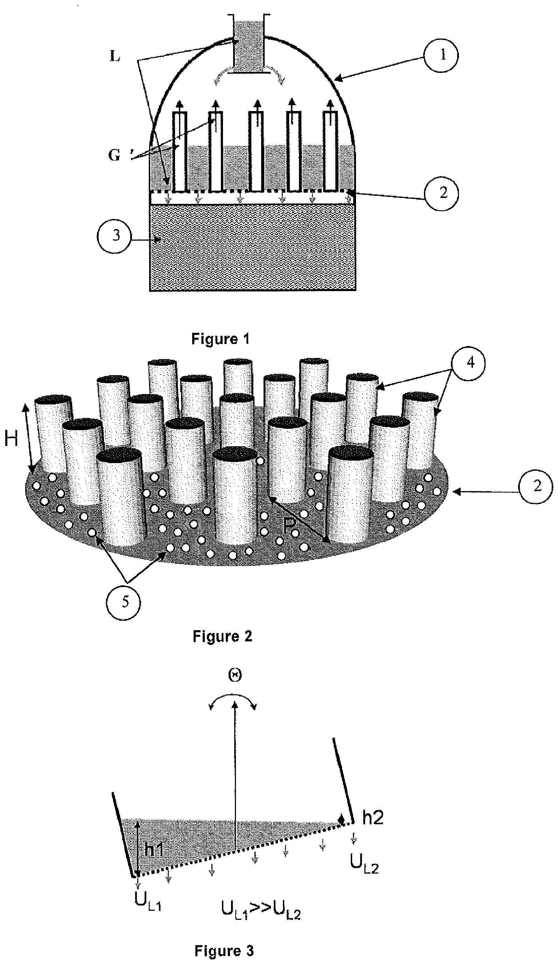

Les colonnes utilisées dans ces unités offshores de traitement de gaz et/ou de capture de $CO_2$ et/ou de distillation et/ou de déshydratation fonctionnent généralement sur le principe d'un échange de matière et/ou de chaleur entre le gaz et le fluide qui circulent dans les colonnes. La figure 1 représente un cas particulier d'une colonne de traitement de gaz (1) équipée d'un plateau distributeur en tête de colonne. Classiquement, cette colonne de traitement de gaz (1) comporte plusieurs sections (3) remplies par un contacteur, un plateau distributeur (2) est disposé au-dessus de chaque section (3). Le contacteur gaz/liquide met en contact le gaz (G) et le liquide (L) afin de permettre les échanges.

Les distributeurs standards (2) utilisés dans les colonnes d'absorption/régénération ou encore de distillation sont généralement constitués d'un plateau collecteur/distributeur équipé de cheminées (4) (cf. figure 2). La distribution du liquide se fait par le passage du liquide dans des orifices (5) positionnés sur le bas du plateau (2) et la distribution du gaz se fait par les cheminées (4). Chaque cheminée (4) permet le passage du gaz, selon le mode de fonctionnement contre-courant ou co-courant, de la partie basse de la colonne vers la partie haute de la colonne (1) ou bien de la partie haute vers la partie basse. Les cheminées (4) sont en saillie d'un côté du plateau (2) et sont perpendiculaires à celui-ci. Chaque cheminée (4) est formée de plusieurs parois, par exemple parallélépipédiques ou cylindriques qui délimitent un volume interne qui est ouvert de part et d'autre du plateau (2). Pour éviter que le liquide ne passe dans les cheminées (4), l'ouverture d'échappement ou d'arrivée du gaz au dessus du plateau (selon le mode de fonctionnement à contre-courant ou à co-courant), est préférentiellement orthogonale à la direction longitudinale de la cheminée (4). L'objectif du plateau distributeur est de distribuer le liquide (L) de manière homogène sur le contacteur gaz/liquide (3).

Les plateaux équipés de cheminées peuvent être de différents types, et positionnées suivant différentes configurations. Différentes variantes de plateaux distributeurs sont exposées notamment dans les demandes de brevet et brevets suivants : US6338774B, US2004020238A, US6149136A et US5752538A.

Les colonnes de contact gaz/liquide considérées sont placées sur des structures flottantes, par exemple, de type bateau, plateforme ou encore barge, sensibles à la houle. De ce fait, les équipements installés sur ces unités et notamment les plateaux distributeurs gaz/liquide subissent des mouvements de houle avec jusqu'à six degrés de liberté ("lacet, tangage, roulis, pilonnement, balancement, poussée").

A titre indicatif, l'angle associé à la combinaison des oscillations de tangage et de roulis est de l'ordre de +/- 5° avec une période allant de 15 à 20 s. Les ordres de grandeur des accélérations longitudinale, transversale et verticale rencontrées dans la colonne varient respectivement entre 0,2/0,7/0,2 m/s$^2$ à 6 m au dessus du pont sur lequel est disposée la colonne et 0,3/1,2/0,3 m/s$^2$ à 50 m au dessus du pont.

Dans ces conditions, le fonctionnement des plateaux distributeurs classiques équipés de cheminées (figure 2) peut être fortement perturbé. En effet, le fonctionnement de ces distributeurs est principalement gravitaire, une garde de liquide de hauteur homogène "h" doit s'établir sur le plateau distributeur. Le carré de la vitesse de passage du liquide par les orifices (5) situés en bas du plateau (2) est proportionnel à la hauteur de la garde liquide ($U_L^2 \propto gh$). Lorsque le plateau (2) est incliné sous l'effet de la houle (figure 3), la hauteur de la garde liquide n'est plus uniforme sur le plateau distributeur ($h_1 > h_2$) ce qui provoque un déséquilibre dans la distribution du liquide en entrée du contacteur gaz/liquide (3). La qualité de distribution et donc l'efficacité de la colonne sont fortement impactées. Cette mal-distribution, si elle n'est pas maitrisée, peut sensiblement dégrader les performances de la colonne. Il faudrait une garde liquide importante (environ 0,6 m) pour compenser ces effets, ce qui signifie une augmentation de l'encombrement et du poids ce qui ne convient pas pour des unités offshore.

Afin d'éviter ce type de problèmes, des éléments de distribution peu sensibles aux défauts d'horizontalité ont été mis en œuvre. Ces distributeurs sont généralement constitués d'un collecteur et d'un distributeur reliés par une ou plusieurs conduites verticales relativement longues pour que le distributeur reste en charge quelles que soient les conditions de houle rencontrées. Ces distributeurs sont généralement peu sensibles aux effets de houle et génèrent une bonne qualité de distribution mais sont très encombrants : leur hauteur peut être de plusieurs mètres dans certains cas (US2004020238 A)

Une autre solution à ces problèmes est décrite dans les brevets FR 2771018 A et FR 2771019 A, elle consiste à utiliser deux distributeurs (primaire et secondaire). Chaque distributeur est divisé en plusieurs compartiments dans lesquels se répartit le liquide. Grâce à ces compartiments, le liquide est mieux réparti lors de l'inclinaison de la colonne. Toutefois, cette solution reste encombrante car elle nécessite deux distributeurs. En outre, les compartiments ne communiquant pas ensemble, la répartition du liquide dans les compartiments n'est pas équilibrée.

Le brevet US 5,132,055, quant à lui, divulgue un plateau distributeur dans lequel les cheminées permettent de compartimenter la zone d'écoulement du liquide. Un tel plateau distributeur est illustré en figure 4. Selon ce document, les cheminées sont alors toutes parallèles. Les compartiments possèdent donc tous une surface différente. En outre, le parallélisme des cheminées ne permet pas d'assurer une bonne distribution et une bonne répartition du liquide sur l'ensemble du plateau. En effet, lorsque l'inclinaison du plateau est parallèle à ces cheminées, la hauteur de la garde de liquide varie de manière importante entre les deux extrémités du plateau.

L'invention concerne un plateau distributeur comportant des moyens de passage du gaz et des moyens de passage du liquide, les moyens de passage de gaz étant répartis de telles sortes qu'ils forment des compartiments, de manière à diminuer la variation de la hauteur de la garde liquide sous l'effet de la houle afin de garantir une bonne distribution et une bonne répartition du liquide sur l'ensemble du plateau.

**Le dispositif selon l'invention**

L'invention concerne un plateau distributeur pour colonne d'échange de chaleur et/ou de matière entre un gaz (G) et un liquide (L), comprenant au moins un moyen pour le passage dudit gaz à travers ledit plateau, ledit moyen étant formé d'au moins une paroi. La paroi définit sur la surface dudit plateau des compartiments de surfaces sensiblement identiques, et chaque compartiment comprend au moins un moyen pour le passage dudit liquide à travers ledit plateau.

Selon l'invention, lesdits moyens pour le passage dudit gaz sont constitués d'au moins une cheminée en saillie d'une hauteur H sur l'une des surfaces dudit plateau.

Selon l'invention, ledit plateau comporte plusieurs moyens de passage du gaz, lesdits moyens de passage du gaz étant espacés, pour permettre l'écoulement d'une partie du liquide entre les compartiments.

Avantageusement, ledit plateau comporte plusieurs moyens de passage du gaz, lesdits moyens de passage du gaz étant identiques.

Selon un mode de réalisation, ledit plateau est circulaire, et dans lequel un premier groupe desdits moyens de passage du gaz est orienté selon un premier diamètre dudit plateau.

Selon un mode de réalisation, un deuxième groupe desdits moyens de passage du gaz est orienté selon un deuxième diamètre dudit plateau, le deuxième diamètre étant sensiblement perpendiculaire au premier diamètre.

Selon un mode de réalisation, ledit plateau est circulaire, et dans lequel un troisième groupe desdits moyens de passage du gaz est orienté de manière à sensiblement former un cercle concentrique avec le plateau.

Selon un mode de réalisation, un quatrième groupe desdits moyens de passage du gaz est orienté de manière à diviser en deux parties identiques, les compartiments extérieurs formées par les premier, deuxième et troisième groupes desdits moyens de passage du gaz.

De préférence, les dimensions sont définies de la manière suivante :

a) la longueur L1 entre deux moyens de passage du gaz consécutifs du troisième groupe est comprise entre 0 et 200 mm préférentiellement entre 0 et 100 mm.

b) la longueur L2 entre un moyen de passage du gaz (4) du troisième groupe et un moyen de passage du gaz externe est comprise entre 0 et 200 mm préférentiellement entre 0 et 100 mm.

c) la longueur L3 entre le bord du plateau et les moyens de passage du gaz externes est comprise entre 0 et 200 mm préférentiellement entre 0 et 100 mm.

d) la longueur d'un compartiment Z est comprise entre 20 et 2000 mm et est préférentiellement inférieure à

$$\frac{50}{2\tan\theta}\,(mm),$$

$\theta$ étant l'angle d'inclinaison maximum du plateau imposé.

De manière avantageuse, les moyens de passage du gaz sont parallélépipédiques.

En variante, les moyens de passage du liquide sont des cheminées équipées d'au moins une perforation, lesdites cheminées étant en saillie sur l'une des surfaces dudit plateau.

En outre, l'invention concerne une colonne de mise en contact gaz/liquide offshore, dans laquelle deux fluides sont mis en contact au moyen d'au moins un contacteur gaz/liquide, ladite colonne comprenant au moins une première entrée d'un fluide liquide, au moins une deuxième entrée d'un fluide gazeux, au moins une première sortie d'un fluide gazeux et au moins une deuxième sortie d'un fluide liquide. La colonne comporte un plateau distributeur tel que défini précédemment pour permettre la distribution des fluides sur ledit contacteur.

De plus, l'invention concerne une unité de traitement de gaz et/ou de captage du $CO_2$ par lavage du gaz au moyen d'une solution absorbante, notamment contenant des amines. L'unité comporte au moins une colonne selon l'invention, pour permettre les échanges entre le gaz et la solution absorbante.

**EP 2 653 203 B1**

L'invention concerne également une unité de distillation et/ou de déshydratation d'un gaz, comportant au moins une colonne (1) tel que définie précédemment, pour permettre les échanges entre le gaz et un liquide.

L'invention concerne aussi une barge flottante offshore, notamment pour la récupération d'hydrocarbures, caractérisée en ce qu'elle comprend une unité de traitement de gaz et/ou de captage de CO2 selon l'invention ou une unité de distillation et/ou de déshydratation selon l'invention, pour nettoyer des gaz produits.

L'invention concerne un procédé de fabrication d'un plateau tel que décrit précédemment, dans lequel on réalise les étapes suivantes :

a) on définit un indice IQ de déséquilibre dudit plateau :

$$IQ(\%) = \frac{U_{L1} - U_{L2}}{(U_{L1} + U_{L2})/2} 100$$

avec $U_{L1}$, $U_{L2}$ les vitesses du liquide sortant du plateau à deux extrémités diamétralement opposées du plateau ;

b) on choisit un indice de déséquilibre maximal dudit plateau et un angle $\theta$ d'inclinaison maximale dudit plateau par rapport à l'horizontale ;

c) on détermine des espacements (L1, L2, L3, Z) entre lesdites moyens de passage du gaz permettant d'obtenir ledit indice de déséquilibre maximal ; et

d) on positionne lesdites cloisons en respectant les espacements.

## Présentation succincte des figures

D'autres caractéristiques et avantages du dispositif selon l'invention, apparaîtront à la lecture de la description ci-après d'exemples non limitatifs de réalisations, en se référant aux figures annexées et décrites ci-après.

La figure 1, déjà décrite, illustre le cas particulier d'une colonne de traitement de gaz ou de capture de CO$_2$ équipée d'un plateau distributeur en tête de colonne La figure 2, déjà décrite, illustre un plateau distributeur selon un art antérieur.

La figure 3, déjà décrite, illustre un plateau distributeur incliné selon un art antérieur.

La figure 4, déjà décrite, illustre un plateau distributeur selon un art antérieur.

La figure 5, illustre un plateau distributeur selon un mode de réalisation de l'invention.

La figure 6, illustre une vue de dessus d'un plateau distributeur selon le mode de réalisation de la figure 5.

Les figures 7a) à 7c) illustrent l'évolution de la garde de liquide pour trois positions angulaires (0, 5° et -5°) d'un plateau classique selon l'art antérieur de la figure 2.

Les figures 8a) à 8c) illustrent l'évolution de la garde de liquide pour trois positions angulaires (0, 5° et -5°) d'un plateau spécifique selon l'art antérieur de la figure 4.

Les figures 9a) à 9c) illustrent l'évolution de la garde de liquide pour trois positions angulaires (0, 5° et -5°) du plateau selon le mode de réalisation de la figure 5.

La figure 10 est une courbe comparative entre l'invention et l'art antérieur.

La figure 11 illustre le plateau distributeur de l'invention incliné.

La figure 12 illustre un deuxième mode de réalisation de l'invention.

## Description détaillée de l'invention

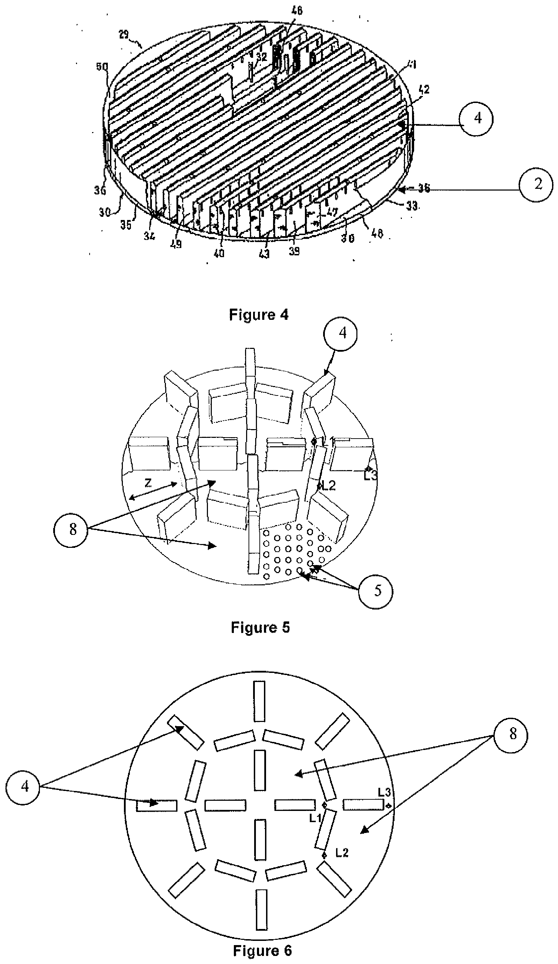

Les figures 5 et 6 illustrent un plateau distributeur selon l'invention.

L'invention concerne un plateau distributeur pour colonne (1) d'échange de chaleur et/ou de matière entre un gaz (G) et un liquide (L), comprenant classiquement au moins un moyen de passage du gaz (par exemple une cheminée) (4) pour le passage dudit gaz d'un côté à l'autre dudit plateau, et au moins un moyen de passage du liquide (par exemple un orifice) (5) pour le passage dudit liquide d'un côté à l'autre dudit plateau (2).

Selon l'invention, les cheminées (4) sont réparties de telle sorte que leurs parois parallélépipédiques ou cylindriques délimitent des compartiments (8) sur la surface du plateau (2). Les cheminées génèrent donc des compartiments (8) de liquide, et servent de "barrière" lorsque le plateau est incliné, ainsi on maintient une garde de liquide relativement homogène même lors d'inclinaison importante. Ainsi, une bonne qualité de distribution du liquide sur le contacteur gaz/liquide est garantie. On appelle garde de liquide, l'interface entre le gaz et le liquide. La hauteur de la garde de liquide correspond au niveau du liquide par rapport à la surface supérieure du plateau. En outre, on appelle zone d'écoulement du liquide la zone sur laquelle circule le liquide ; il s'agit du côté supérieur du plateau, sur lequel les cheminées sont en saillie. Selon l'invention, les surfaces des compartiments (8) sont sensiblement identiques (avec des variations de plus ou moins 10 %) pour assurer une bonne répartition et une bonne distribution du liquide.

De plus, les cheminées (4) sont espacées, et grâce à ces espacements le liquide peut s'écouler sur la totalité de la surface du plateau distributeur (2), assurant ainsi une bonne dispersion radiale du liquide. On dimensionne les longueurs (par exemple L$_1$, L$_2$, L$_3$, et Z) de ces espacements de manière à assurer une bonne répartition et une bonne distribution du liquide. De préférence, chaque compartiment (8) et espacement comportent plusieurs orifices (5).

Selon un mode de réalisation de l'invention, les cheminées (4) sont parallélépipédiques, ce qui facilite leur mise en place et leur fabrication. De manière avantageuse, les cheminées sont toutes identiques. Les orifices (5) qui équipent le plateau (2) peuvent avoir un pas de répartition triangulaire ou carré. Avantageusement, le plateau (2) comporte un nombre d'orifices (5) supérieur au nombre de cheminées (4). De plus, les orifices (5) peuvent être de même taille ou de tailles différentes. Chaque compartiment (8) comporte au moins un orifice (5).

La figure 6 illustre une vue de dessus d'un mode de réalisation préférentiel de l'emplacement des cheminées. Sur cette figure les orifices (5) ne sont pas représentés.

De manière préférentielle, les cheminées ont une hauteur sensiblement identique aux cheminées classiques de l'art antérieur, ainsi l'encombrement vertical du plateau distributeur n'est pas modifié par l'invention. Classiquement, le plateau distributeur est circulaire.

Selon des modes de réalisation spécifiques de l'invention, les cheminées sont réparties selon les implantations suivantes prises seules ou en combinaison :

- un premier groupe de cheminées est orienté selon un premier diamètre du plateau, divisant ainsi la zone d'écoulement du liquide en deux demi-disques. Selon un mode de réalisation, ce premier groupe de cheminées est constitué de quatre cheminées.
- un deuxième groupe de cheminées est orienté selon un deuxième diamètre du plateau, divisant ainsi la zone d'écoulement du liquide en deux demi-disques. De préférence, le deuxième diamètre est perpendiculaire au premier diamètre pour former quatre portions de disques identiques. Selon un mode de réalisation, ce deuxième groupe de cheminées est constitué de quatre cheminées.
- un troisième groupe de cheminées est orienté de manière à former sensiblement un cercle concentrique au plateau. Ce cercle divise donc la zone d'écoulement en deux zones : une première dite interne et une deuxième dite externe. Selon un mode de réalisation, le troisième groupe est constitué de huit cheminées. L'espacement entre deux cheminées consécutives du troisième groupe est noté $L_1$. On note Z la distance entre le bord du plateau et les cheminées du troisième groupe.
- un quatrième groupe de cheminées est orienté de manière à diviser en deux parties sensiblement égales, les compartiments externes formés par les premier, deuxième et troisième groupes. Selon un mode de réalisation, ces cheminées sont orientées selon un angle de 45 ° par rapport aux cheminées des premier et deuxième groupes. En outre, le quatrième groupe est constitué de quatre cheminées. L'espacement entre une cheminée du quatrième groupe et une cheminée du troisième groupe est noté $L_2$. L'espacement entre le bord du plateau et les cheminées externes est noté $L_3$.

Pour ce mode de réalisation, les distances Z,

$L_1,L_2,L_3$ peuvent être choisies, de manière à optimiser l'écoulement du liquide sur la totalité de la zone d'écoulement du liquide pour assurer une bonne distribution du liquide ; un espacement trop important des cheminées entraîne un déséquilibre de la hauteur de garde tout en restant inférieur au déséquilibre existant avec la solution classique de l'art antérieur, alors qu'un espacement trop faible réduit l'écoulement du liquide et peut nuire à la répartition du liquide sur le plateau.

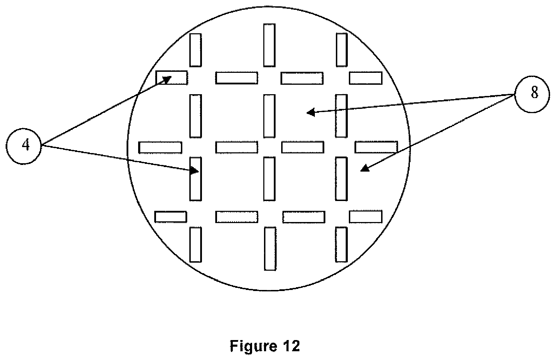

Toutefois, d'autres configurations des cheminées (4) sont envisageables (par exemple, tel que représenté en figure 12). Le nombre de cheminées (4) utilisées ainsi que la configuration choisie dépendent du diamètre du plateau. En effet, de préférence, le nombre de compartiments est plus important sur un plateau de grand diamètre que sur un plateau de plus petit diamètre.

Pour caractériser la sensibilité du plateau au milieu marin, un indice de déséquilibre est généralement défini par la relation suivante:

$$IQ(\%) = \frac{U_{L1} - U_{L2}}{(U_{L1} + U_{L2})/2} 100 \quad \text{(Équation 1)}$$

Avec : $U_{L1,2}$ : La vitesse du liquide sortant des orifices situés aux extrémités du plateau distributeur comme présenté dans les figures 3 (art antérieur) et 11 (selon l'invention). Une faible valeur d'indice de déséquilibre (IQ) indique une bonne distribution du liquide. A l'inverse, une valeur élevée d'IQ indique un fort déséquilibre de distribution et une forte sensibilité au mouvement de houle du plateau.

La distance caractéristique Z du plateau peut être optimisée de manière à minimiser l'indice de déséquilibre. En fonction des caractéristiques du plateau et des conditions de fonctionnement : c'est-à-dire l'angle maximum d'inclinaison $\theta$ du plateau par rapport à l'horizontale imposé par le milieu marin, il est possible de définir une longueur optimale de Z avec la combinaison des formulations suivantes :

$$\begin{cases} h_{max} = ho + Z\tan\theta \\ h_{min} = ho - Z\tan\theta \\ \Delta h = h_{max} - h_{min} = 2Z\tan\theta \\ U_{L1} \propto c_f\sqrt{2gh_{max}} \\ U_{L2} \propto c_f\sqrt{2gh_{min}} \end{cases}$$

avec :

$c_f$ : le coefficient de frottement à l'orifice,
$h_0$ : hauteur à l'équilibre ($\theta = 0°$) de la garde de liquide dans un compartiment du plateau distributeur,
$h_{max}$ : hauteur maximale de garde de liquide dans un compartiment du plateau distributeur,

$h_{min}$ : hauteur minimale de la garde de liquide dans un compartiment du plateau distributeur,

$U_{L1}$, $U_{L2}$ : vitesse liquide à l'orifice, et

le signe $\propto$ signifie proportionnel à.

Il est donc possible de déterminer une longueur Z en fonction de la géométrie du plateau et des conditions marines pour respecter un indice de déséquilibre donnée. Par exemple pour avoir un indice de déséquilibre de IQ< 10%, il faut que $\Delta h \leq 50mm$ de ce fait Z doit être inférieur à :

$$Z \leq \frac{50}{2\tan\theta}\,(mm)\,.$$

Alternativement, afin d'optimiser la répartition du liquide entre les compartiments (8), on peut garantir un écoulement minimum mais tout en gardant un volume de liquide homogène sur la totalité du plateau en imposant des longueurs comprises entre 0 et 200 mm, plus préférentiellement entre 0 et 100 mm pour les différents espacements. Pour le mode de réalisation illustré à la figure 5, on peut choisir la configuration suivante :

a) la longueur L1 entre deux cheminées (4) consécutives du troisième groupe est comprise entre 0 et 200 mm

b) la longueur L2 entre une cheminée (4) du troisième groupe et une cheminée (4) externe est comprise entre 0 et 200 mm

c) la longueur L3 entre le bord du plateau et les cheminées externes est comprise entre 0 et 200 mm

d) la longueur d'un compartiment Z dépend du diamètre du plateau et des conditions marines rencontrées. La longueur Z est comprise entre 20 et 2000 mm et est préférentiellement inférieure à $\frac{50}{2\tan\theta}\,(mm)$  avec $\theta$ l'angle d'inclinaison maximum du plateau imposé par le milieu marin.

Une des longueurs (L1, L2 et L3) peut être nulle, toutefois, dans ce cas, les deux autres espacements doivent être suffisants pour la circulation du liquide.

En variante du mode de réalisation préférentiel de l'invention, on peut modifier les caractéristiques suivantes :

- les compartiments ont sensiblement une forme triangulaire,
- les compartiments ont sensiblement une forme hexagonale (par exemple du type alvéole de ruche),
- les compartiments ont sensiblement une forme rectangulaire, les cheminées étant perpendiculaires (figure 12),

- les cheminées ont une base carrée et on juxtapose plusieurs cheminées pour former les parois délimitant les compartiments,
- les moyens de passage du liquide (5) sont des cheminées équipées d'au moins une perforation (ou d'au moins une rangée de perforations), lesdites cheminées étant en saillie sur l'une des surfaces dudit plateau (2).

L'invention concerne également une colonne offshore (1) d'absorption ou de régénération d'un fluide, dans laquelle deux fluides sont mis en contact au moyen d'un contacteur gaz/liquide (3), ladite colonne (1) comprenant au moins une première entrée d'un fluide liquide, au moins une deuxième entrée d'un fluide gazeux, au moins une première sortie d'un fluide gazeux et au moins une deuxième sortie d'un fluide liquide. La colonne (1) comporte en outre un plateau distributeur (2) tel que décrit ci-dessus, pour permettre la distribution des fluides sur ledit contacteur (3).

De manière avantageuse, le contacteur gaz/liquide (3) est un lit de garnissage structuré ou vrac. Le plateau distributeur (2) peut être associé avec un système de dispersion disposé sous le plateau distributeur, ce système de dispersion peut être un ensemble d'arroseurs ou de conduites perforées disposées en parallèle sous le plateau distributeur. Ce système de dispersion assure une bonne dispersion du liquide dans le contacteur gaz/liquide.

Le plateau selon l'invention est également adapté aux colonnes de distillation et aux colonnes de déshydratation.

En outre, l'invention concerne une unité de traitement de gaz et/ou de captage du $CO_2$ par lavage du gaz au moyen d'une solution absorbante, contenant par exemple des amines. L'unité comporte au moins une colonne (1) telle que définie ci-dessus, pour permettre les échanges entre le gaz et la solution absorbante, et principalement entre le gaz et les amines pouvant être contenues dans cette solution.

Enfin, l'invention concerne une barge flottante offshore du type FPSO ou FLNG, notamment pour la production et le traitement d'hydrocarbures. La barge comprend une unité de traitement de gaz et/ou de captage de $CO_2$ telle que décrite ci-dessus, pour nettoyer des gaz produits.

Selon un mode de réalisation, les dimensions du plateau et de ses composants vérifient les intervalles suivants :

- le plateau de distribution (2) a une hauteur comprise entre 100 et 2000 mm, de préférence entre 600 et 1000 mm,
- le diamètre du plateau (2) est compris entre 400 et 5000 mm,
- la longueur des cheminées (4) est comprise entre 50 et 1200 mm, de préférence entre 50 et 700 mm,
- la hauteur des cheminées (4) est comprise entre 300 et 1000 mm, de préférence entre 400 et 700 mm,

-   les distances $L_1, L_2, L_3$ sont comprises entre 0 et 200 mm, de préférence entre 0 et 100 mm.

En outre, l'invention concerne un procédé de fabrication d'un plateau distributeur tel que décrit précédemment, dans lequel on réalise les étapes suivantes :

a) on choisit au préalable une configuration de cheminées (4) sur ledit plateau (2) en déterminant un nombre de cheminées utilisées et la manière de les implanter : par exemple selon le mode de réalisation de la figure 5 ;

b) on définit un indice IQ de déséquilibre dudit plateau (2) :

$$IQ(\%) = \frac{U_{L1} - U_{L2}}{(U_{L1} + U_{L2})/2} 100$$

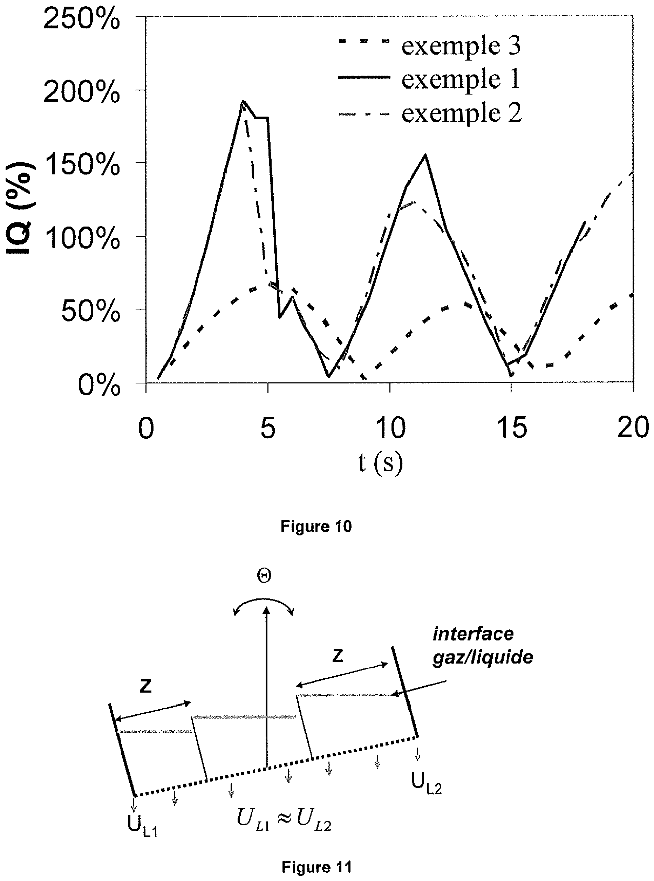

avec $U_{L1}$, $U_{L2}$ les vitesses du liquide sortant du plateau à deux extrémités diamétralement opposées du plateau (figure 11) ;

c) on choisit un indice de déséquilibre maximal dudit plateau (2) et un angle $\theta$ d'inclinaison maximale dudit plateau par rapport à l'horizontale : on se fixe un indice de déséquilibre en fonction des limites de fonctionnement (par exemple liées à la houle) d'utilisation de la colonne ;

d) on détermine des espacements (L1, L2, L3, Z) entre lesdites moyens de passage du gaz (4) permettant d'obtenir ledit indice de déséquilibre maximal ; et

e) on positionne lesdites cloisons en respectant les espacements.

Exemple comparatif

Pour illustrer les avantages de notre invention, on se propose de comparer les résultats obtenus par l'invention (figure 5) à ceux obtenus par un plateau distributeur "classique" (figure 2) et à ceux obtenus par un plateau distributeur tel que décrit dans la demande de brevet US 5,132,055 (figure 4). Dans ce cadre, on utilise une approche numérique de type CFD (de l'anglais Computational Fluid Dynamics pouvant être traduit par mécanique des fluides numériques) qui consiste à étudier les mouvements d'un fluide, ou leurs effets, par la résolution numérique des équations régissant le fluide.

L'approche numérique utilisée est de type suivi d'interface (VOF pour Volume of Fluid : volume de fluide) décrite dans Hirt & Nichols, JCP 39, 201-225 (1981). Cette méthode, bien connue par l'homme du métier, est bien adaptée pour simuler le changement de topologie d'interface rencontré dans le distributeur soumis au mouvement de la houle (détachement, recollement d'interface, formation de déférente ...). L'évolution de l'écoulement diphasique est décrite par les équations de conservation de la masse, de conservation de quantité de mouvement, et par l'équation de transport du taux de présence.

Les calculs ont été réalisés avec le logiciel commercial Fluent 13 ® (ANSYS, Etats-Unis)

Pour l'ensemble des calculs CFD d'évaluation présentés ci-après, l'angle associé au mouvement de roulis simulé est de +/- 5° avec une période de 15 s. Les propriétés des fluides sont : $\rho_L$ = 1055 kg/m3, $\mu_L$ = 2,5 cp, $\rho_G$ = 55 kg/m3, $\mu_G$ = 0,013 cp. La hauteur de garde de liquide sur le distributeur considérée est de 400 mm. Une distance au point de giration de la plateforme offshore de 50 m est prise en compte dans les calculs. Cette distance correspond aux distributeurs situés en tête de colonne, exposés aux plus fortes accélérations. Enfin, les effets capillaires sont supposés négligeables.

On rappelle que l'efficacité de distribution de l'invention est comparée à celle d'un plateau distributeur "classique" (figure 2) et à celle d'un plateau distributeur spécifique (figure 4) dans le cas où le plateau est soumis aux mouvements de la houle. La sensibilité au milieu marin du plateau est quantifiée par l'indice de déséquilibre défini par l'équation (1).

Exemple 1 : Propriétés du plateau standard (art antérieur de la figure 2)

-   Diamètre du plateau distributeur : 4150 mm
-   Diamètre des cheminées de gaz : 350 mm
-   Hauteur des cheminées de gaz : 700 mm
-   Pas triangulaire des cheminées de gaz P : 200 mm
-   Distance au bord minimum des cheminées gaz : 100 mm
-   Nombre de cheminées : 19
-   Porosité du plateau (surface cheminées/surface totale): 13,5

Exemple 2 : Propriétés du plateau du brevet US 5,132,055 (figure 4) :

-   Diamètre du plateau distributeur (2) : 4150 mm
-   Épaisseur des cheminées de gaz (4) : 70 mm
-   Hauteur des cheminées de gaz (4) : 700 mm
-   Pas entre les cheminées de gaz (4) : 200 mm
-   Distance au bord minimum des cheminées (4) : 110 mm

Exemple 3 : Propriétés du plateau selon l'invention (répartition des cheminées selon le mode de réalisation de la figure 5)

-   Diamètre du plateau distributeur (2) : 4150 mm

- Hauteur des cheminées (4) de gaz : 700 mm
- Distance L1 : 0 mm
- Distance L2 : 82 mm
- Distance L3 : 50 mm
- Distance Z : 925 mm

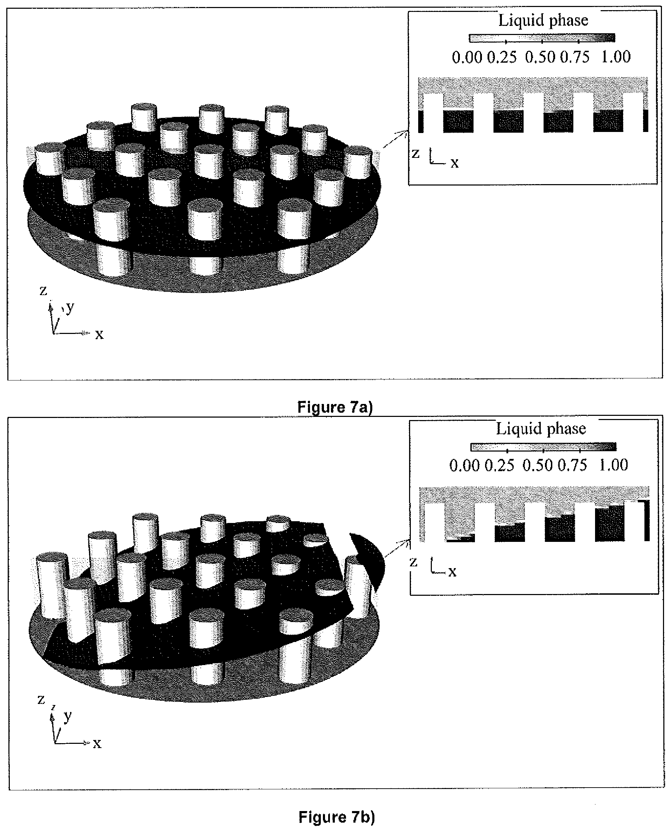

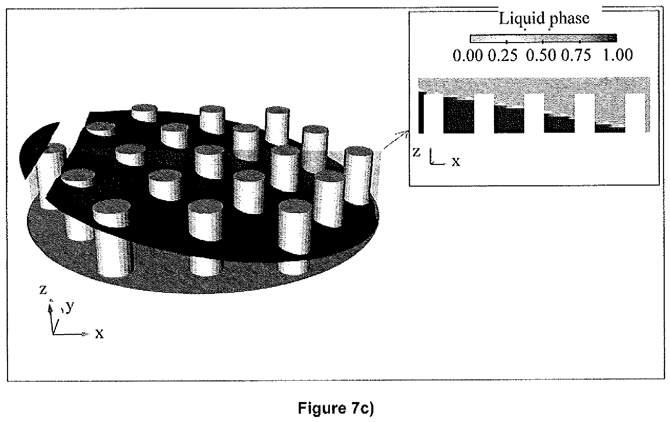

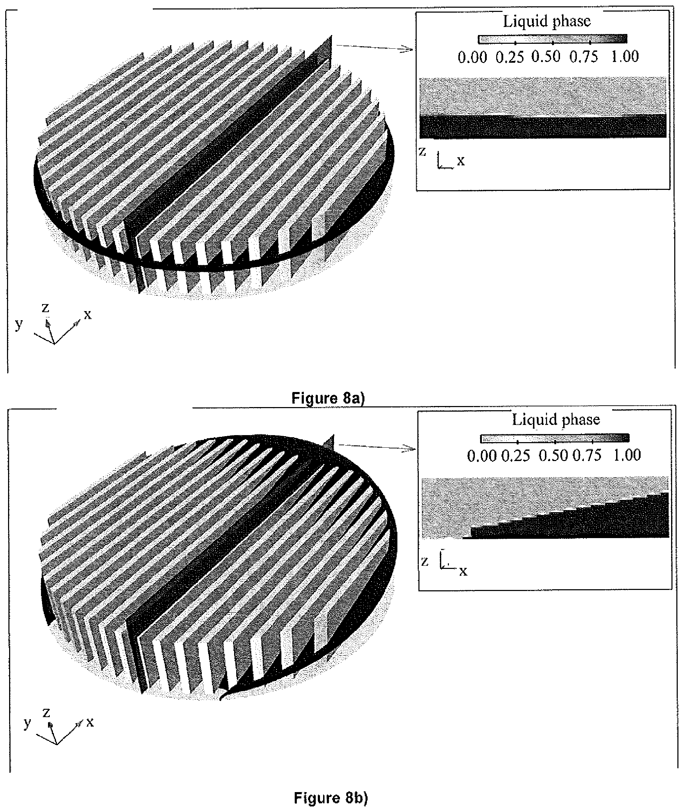

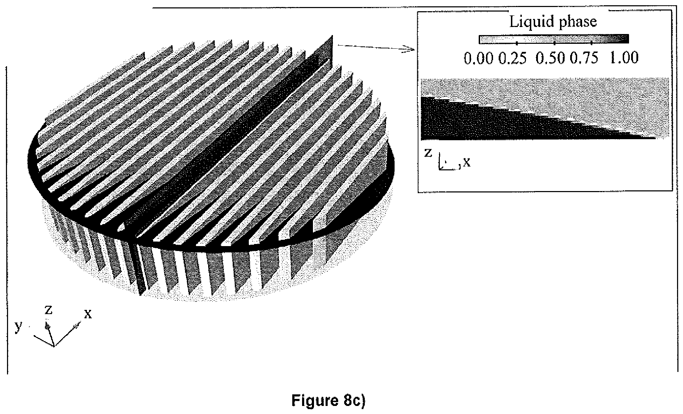

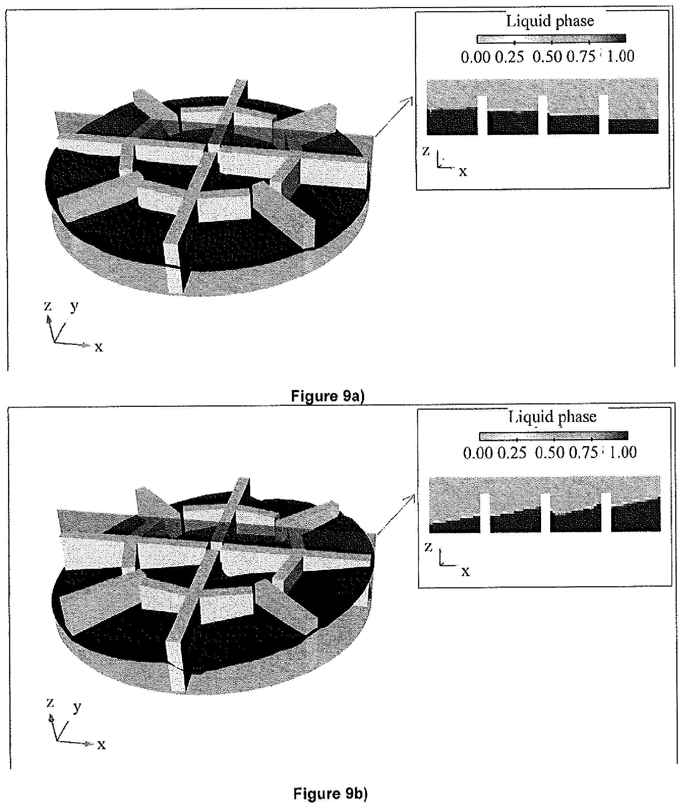

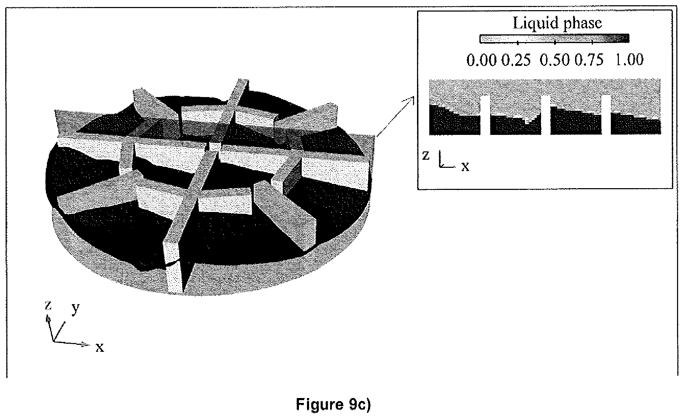

Les figures 7, 8 et 9 présentent l'évolution de la garde liquide (interface gaz/liquide) sur le distributeur lorsque ce dernier est soumis aux mouvements marins, respectivement pour les exemples 1, 2 et 3. Les résultats sont issus de calculs de type CFD dynamique. Les figures représentent différents instants correspondant à différentes positions extrêmes. Les figures 7a), 8a) et 9a) représentent les plateaux dans une position horizontale ($\theta = 0°$), les figures 7b), 8b) et 9b) illustrent le plateau dans une première position extrémale ($\theta = 5°$) correspondant à un mouvement de houle, les figures 7c), 8c) et 9c) représentent les plateaux dans une deuxième position extrémale opposée à la première position extrémale ($\theta = -5°$). La partie droite des figures 7, 8 et 9 illustrent la variation de la hauteur de la garde de liquide dans un plan passant par un diamètre du plateau.

Les résultats indiquent clairement que le plateau distributeur "classique" est fortement sensible aux effets de houle.

Pour le dispositif de l'invention en revanche, les résultats montrent que la garde liquide reste bien homogène sur le plateau distributeur malgré le mouvement de la houle, assurant ainsi une bonne qualité de distribution.

Ces résultats sont quantifiés sur la figure 10 qui compare l'indice de déséquilibre obtenu avec les trois plateaux distributeurs. Pour le plateau "classique" (exemple 1), l'indice de déséquilibre varie entre 0 % et 200 % sur une période d'oscillation du plateau avec un pic à 200 % lorsque l'angle d'inclinaison atteint son maximum à savoir 5°. Il est à noter que la valeur de 200 % indique qu'une partie du plateau distributeur n'est plus en contact avec le liquide (cf. figures 7b) et 7c)). Sur une période de 15 s le taux de mal-distribution moyen du distributeur "classique" est de 80 %.

Lorsque l'inclinaison du plateau décrit dans le brevet US 5,132,055 (exemple 2) est parallèle aux cheminées, le plateau distributeur reste très sensible à la houle, l'indice de déséquilibre varie également entre 0 % et 200 %. Sur une période de 15 s le taux de mal-distribution moyen du plateau distributeur est de 73 %, proche des 80 % du plateau "classique".

En revanche, le plateau selon l'invention (exemple 3) présente des performances significativement meilleures. En effet, l'indice de déséquilibre varie entre 0 et 60 % ; il n'y a donc pas de moment où une partie du plateau est asséchée et le taux de mal-distribution moyen pour une période de 15 s est de 40 %. On remarque que grâce à la répartition des cheminées, l'indice de déséquilibre reste faible quelque soit la direction de l'inclinaison du plateau distributeur. Pour arriver à des résultats équivalents au système proposé avec le plateau "classique", il faudrait une garde de liquide d'environ 650 mm de hauteur ce qui rendrait ce dernier plus encombrant et plus lourd (poids du liquide) avec des cheminées gaz plus haute pour éviter leurs engorgement et notablement plus coûteux que le système proposé. Cet exemple montre que l'invention permet un gain significatif en encombrement et en efficacité de distribution en milieu flottant.

**Revendications**

1. Plateau distributeur pour colonne (1) d'échange de chaleur et/ou de matière entre un gaz (G) et un liquide (L), comprenant plusieurs moyens pour le passage dudit gaz à travers ledit plateau (2), chaque moyen étant formé d'au moins une paroi (4), **caractérisé en ce que** ladite paroi (4) définit sur la surface dudit plateau (2) des compartiments (8) de surfaces sensiblement identiques, et chaque compartiment comprend au moins un moyen (5) pour le passage dudit liquide à travers ledit plateau (2) et **en ce que** lesdits moyens de passage du gaz (4) sont espacés, pour permettre l'écoulement d'une partie du liquide entre les compartiments (8) et **en ce que** lesdits moyens (4) pour le passage dudit gaz sont constitués d'au moins une cheminée (4) en saillie d'une hauteur H sur l'une des surfaces dudit plateau (2).

2. Plateau selon l'une des revendications précédentes, dans lequel ledit plateau (2) comporte plusieurs moyens de passage du gaz (4), lesdits moyens de passage du gaz (4) étant identiques.

3. Plateau selon l'une des revendications précédentes, dans lequel ledit plateau est circulaire, et dans lequel un premier groupe desdits moyens de passage du gaz (4) est orienté selon un premier diamètre dudit plateau.

4. Plateau selon la revendication 3, dans lequel un deuxième groupe desdits moyens de passage du gaz (4) est orienté selon un deuxième diamètre dudit plateau, le deuxième diamètre étant sensiblement perpendiculaire au premier diamètre.

5. Plateau selon l'une des revendications précédentes, dans lequel ledit plateau est circulaire, et dans lequel un troisième groupe desdits moyens de passage du gaz (4) est orienté de manière à sensiblement former un cercle concentrique avec le plateau.

6. Plateau selon la revendication 5, dans lequel un quatrième groupe desdits moyens de passage du gaz (4) est orienté de manière à diviser en deux parties identiques, les compartiments (8) extérieurs formées par les premier, deuxième et troisième groupes desdits moyens de passage du gaz (4).

**7.** Plateau selon la revendication 6, dans lequel les dimensions sont définies de la manière suivante :

a) la longueur L1 entre deux moyens de passage du gaz (4) consécutifs du troisième groupe est comprise entre 0 et 200 mm préférentiellement entre 0 et 100 mm,

b) la longueur L2 entre un moyen de passage du gaz (4) du troisième groupe et un moyen de passage du gaz externe est comprise entre 0 et 200 mm préférentiellement entre 0 et 100 mm,

c) la longueur L3 entre le bord du plateau et les moyens de passage du gaz externes est comprise entre 0 et 200 mm préférentiellement entre 0 et 100 mm, et

d) la longueur d'un compartiment Z est comprise entre 20 et 2000 mm et est préférentiellement inférieure à $\dfrac{50}{2\tan\theta}$ (mm), $\theta$ étant l'angle d'inclinaison maximum du plateau.

**8.** Plateau selon l'une des revendications précédentes, dans lequel les moyens de passage du gaz (4) sont parallélépipédiques.

**9.** Plateau distributeur offshore (1) selon l'une des revendications précédentes, dans lequel les moyens de passage du liquide (5) sont des cheminées équipées d'au moins une perforation, lesdites cheminées étant en saillie sur l'une des surfaces dudit plateau (2).

**10.** Colonne de mise en contact gaz/liquide (3) offshore, dans laquelle deux fluides sont mis en contact au moyen d'au moins un contacteur gaz/liquide (3), ladite colonne comprenant au moins une première entrée d'un fluide liquide, au moins une deuxième entrée d'un fluide gazeux, au moins une première sortie d'un fluide gazeux et au moins une deuxième sortie d'un fluide liquide, **caractérisée en ce que** ladite colonne (1) comporte un plateau distributeur (2) selon l'une des revendications précédentes pour permettre la distribution des fluides sur ledit contacteur (3).

**11.** Unité de traitement de gaz et/ou de captage du $CO_2$ par lavage du gaz au moyen d'une solution absorbante, notamment contenant des aminés, **caractérisée en ce que** ladite unité comporte au moins une colonne (1) selon la revendication 10, pour permettre les échanges entre le gaz et la solution absorbante.

**12.** Unité de distillation et/ou de déshydratation d'un gaz, **caractérisée en ce que** ladite unité comporte au moins une colonne (1) selon la revendication 10, pour permettre les échanges entre le gaz et un liquide.

**13.** Barge flottante offshore, notamment pour la récupération d'hydrocarbures, **caractérisée en ce qu'**elle comprend une unité de traitement de gaz et/ou de captage de CO2 selon la revendication 11 ou une unité de distillation et/ou de déshydratation selon la revendication 12, pour nettoyer des gaz produits.

**14.** Procédé de fabrication d'un plateau selon l'une des revendications 1 à 9, dans lequel on réalise les étapes suivantes :

a) on définit un indice IQ de déséquilibre dudit plateau (2) :

$$IQ(\%) = \frac{U_{L1} - U_{L2}}{(U_{L1} + U_{L2})/2} 100$$

avec $U_{L1}$, $U_{L2}$ les vitesses du liquide sortant du plateau à deux extrémités diamétralement opposées du plateau ;

b) on choisit un indice de déséquilibre maximal dudit plateau (2) et un angle $\theta$ d'inclinaison maximale dudit plateau par rapport à l'horizontale ;

c) on détermine des espacements (L1, L2, L3) entre lesdites moyens de passage du gaz (4) et une distance (Z) entre le bord du plateau et les moyens de passage du gaz (4) permettant d'obtenir ledit indice de déséquilibre maximal, en déterminant lesdites vitesses $U_{L1}$, $U_{L2}$ en fonction de la hauteur h de la garde de liquide, h étant fonction de l'angle $\theta$ d'inclinaison du plateau et desdits espacements ; et

d) on positionne lesdites parois en respectant les espacements.

**Patentansprüche**

**1.** Verteilerplatte für eine Kolonne (1) zum Wärme- und/oder Stoffaustausch zwischen einem Gas (G) und einer Flüssigkeit (L), welche mehrere Mittel für den Durchtritt des Gases durch die Platte (2) umfasst, wobei jedes Mittel von mindestens einer Wand (4) gebildet wird, **dadurch gekennzeichnet, dass** die Wand (4) auf der Oberfläche der Platte (2) Abteilungen (8) mit im Wesentlichen identischen Flächen definiert und jede Abteilung mindestens ein Mittel (5) für den Durchtritt der Flüssigkeit durch die Platte (2) umfasst, und dadurch, dass die Mittel für den Durchtritt des Gases (4) beabstandet sind, um das Fließen eines Teils der Flüssigkeit zwischen den Abteilungen (8) zu ermöglichen, und dadurch, dass die Mittel (4) für den Durchtritt des Gases aus mindestens einem Kamin (4) bestehen, die auf einer der Flächen der Platte (2) um eine Höhe H vorstehen.

**2.** Platte nach einem der vorhergehenden Ansprüche, wobei die Platte (2) mehrere Mittel für den Durchtritt des Gases (4) aufweist, wobei die Mittel für den Durchtritt des Gases (4) identisch sind.

**3.** Platte nach einem der vorhergehenden Ansprüche, wobei die Platte kreisförmig ist und wobei eine erste Gruppe der Mittel für den Durchtritt des Gases (4) entlang eines ersten Durchmessers der Platte ausgerichtet ist.

**4.** Platte nach Anspruch 3, wobei eine zweite Gruppe der Mittel für den Durchtritt des Gases (4) entlang eines zweiten Durchmessers der Platte ausgerichtet ist, wobei der zweite Durchmesser im Wesentlichen senkrecht zu dem ersten Durchmesser ist.

**5.** Platte nach einem der vorhergehenden Ansprüche, wobei die Platte kreisförmig ist und wobei eine dritte Gruppe der Mittel für den Durchtritt des Gases (4) so ausgerichtet ist, dass sie im Wesentlichen einen zu der Platte konzentrischen Kreis bildet.

**6.** Platte nach Anspruch 5, wobei eine vierte Gruppe der Mittel für den Durchtritt des Gases (4) so ausgerichtet ist, dass sie die äußeren Abteilungen (8), die von der ersten, der zweiten und der dritten Gruppe der Mittel für den Durchtritt des Gases (4) gebildet werden, in zwei identische Teile aufteilt.

**7.** Platte nach Anspruch 6, wobei die Abmessungen wie folgt definiert sind:

a) Die Länge L1 zwischen zwei aufeinander folgenden Mitteln für den Durchtritt des Gases (4) der dritten Gruppe liegt zwischen 0 und 200 mm, vorzugsweise zwischen 0 und 100 mm,
b) die Länge L2 zwischen einem Mittel für den Durchtritt des Gases (4) der dritten Gruppe und einem äußeren Mittel für den Durchtritt des Gases liegt zwischen 0 und 200 mm, vorzugsweise zwischen 0 und 100 mm,
c) die Länge L3 zwischen dem Rand der Platte und den äußeren Mitteln für den Durchtritt des Gases liegt zwischen 0 und 200 mm, vorzugsweise zwischen 0 und 100 mm,
d) die Länge einer Abteilung Z liegt zwischen 20 und 2000 mm und ist vorzugsweise kleiner als

$$\frac{50}{2\tan\theta} \; (\mathrm{mm})\;,$$

wobei $\theta$ der maximale Neigungswinkel der Platte ist.

**8.** Platte nach einem der vorhergehenden Ansprüche, wobei die Mittel für den Durchtritt des Gases (4) quaderförmig sind.

**9.** Offshore-Verteilerplatte (1) nach einem der vorhergehenden Ansprüche, wobei die Mittel für den Durchtritt der Flüssigkeit (5) Kamine sind, die mit mindestens einer Lochung ausgestattet sind, wobei die Kamine auf einer der Flächen der Platte (2) vorstehen.

**10.** Kolonne zum Inkontaktbringen eines Gases und einer Flüssigkeit (3) Offshore, in welcher zwei Fluide mittels mindestens einer Gas/Flüssigkeit-Kontakteinrichtung (3) in Kontakt gebracht werden, wobei die Kolonne mindestens einen ersten Einlass für ein flüssiges Fluid, mindestens einen zweiten Einlass für ein gasförmiges Fluid, mindestens einen ersten Auslass für ein gasförmiges Fluid und mindestens einen zweiten Auslass für ein flüssiges Fluid umfasst, **dadurch gekennzeichnet, dass** die Kolonne (1) eine Verteilerplatte (2) nach einem der vorhergehenden Ansprüche aufweist, um die Verteilung der Fluide auf der Kontakteinrichtung (3) zu ermöglichen.

**11.** Einheit zur Behandlung von Gas und/oder zum Auffangen von $CO_2$ durch Waschen das Gases mittels einer absorbierenden Lösung, die insbesondere Amine enthält, **dadurch gekennzeichnet, dass** die Einheit mindestens eine Kolonne (1) nach Anspruch 10 aufweist, um die Austauschvorgänge zwischen dem Gas und der absorbierenden Lösung zu ermöglichen.

**12.** Einheit zur Destillation und/oder Entwässerung eines Gases, **dadurch gekennzeichnet, dass** die Einheit mindestens eine Kolonne (1) nach Anspruch 10 aufweist, um die Austauschvorgänge zwischen dem Gas und einer Flüssigkeit zu ermöglichen.

**13.** Offshore-schwimmender Lastkahn, insbesondere für die Gewinnung von Kohlenwasserstoffen, **dadurch gekennzeichnet, dass** er eine Einheit zur Behandlung von Gas und/oder zum Auffangen von $CO_2$ nach Anspruch 11 oder eine Einheit zur Destillation und/oder Entwässerung nach Anspruch 12 umfasst, um erzeugte Gase zu reinigen.

**14.** Verfahren zur Herstellung einer Platte nach einem der Ansprüche 1 bis 9, wobei die folgenden Schritte ausgeführt werden:

a) Es wird ein Index IQ des Ungleichgewichts der Platte (2) definiert:

$$IQ(\%) = \frac{U_{L1} - U_{L2}}{(U_{L1} + U_{L2})/2}100\;,$$

wobei $U_{L1}$, $U_{L2}$ die Geschwindigkeiten der Flüssigkeit sind, die aus der Platte an zwei einander diametral gegenüberliegenden Enden der Platte austritt;

b) es werden ein maximaler Index des Ungleichgewichts der Platte (2) und ein maximaler Neigungswinkel θ der Platte bezüglich der Horizontalen gewählt;

c) es werden Abstände (L1, L2, L3) zwischen den Mitteln für den Durchtritt des Gases (4) und ein Abstand (Z) zwischen dem Rand der Platte und den Mitteln für den Durchtritt des Gases (4) bestimmt, die es ermöglichen, den maximalen Index des Ungleichgewichts zu erhalten, indem die Geschwindigkeiten $U_{L1}$, $U_{L2}$ in Abhängigkeit von der Höhe h der Flüssigkeitsschutzschicht bestimmt werden, wobei h vom Neigungswinkel $\theta$ der Platte und von den Abständen abhängig ist; und

d) die Wände werden unter Einhaltung der Abstände positioniert.

## Claims

1. Distributor tray for a column (1) for exchange of heat and/or of material between a gas (G) and a liquid (L), comprising multiple means for passing said gas through said tray (2), each means consisting of at least one wall (4), **characterized in that** said wall (4) defines, on the surface of said tray (2), compartments (8) of essentially identical surface area, and each compartment comprising at least one means (5) for passing said liquid through said tray (2) and **in that** said gas passage means (4) are spaced apart in order to allow part of the liquid to flow between the compartments (8) and **in that** said gas passage means (4) consists of at least one chimney (4) projecting by a height H from one of the surfaces of said tray (2).

2. Tray according to one of the preceding claims, wherein said tray (2) comprises multiple gas passage means (4), said gas passage means (4) being identical.

3. Tray according to one of the preceding claims, wherein said tray is circular, and wherein a first group of said gas passage means (4) is oriented along a first diameter of said tray.

4. Tray according to Claim 3, wherein a second group of said gas passage means (4) is oriented along a second diameter of said tray, the second diameter being essentially perpendicular to the first diameter.

5. Tray according to one of the preceding claims, wherein said tray is circular, and wherein a third group of said gas passage means (4) is oriented so as to essentially form a circle that is concentric with the tray.

6. Tray according to Claim 5, wherein a fourth group of said gas passage means (4) is oriented so as to divide, into two identical parts, the outer compartments (8) formed by the first, second and third groups of said gas passage means (4).

7. Tray according to Claim 6, wherein the dimensions are defined as follows:

    a) the length L1 between two consecutive gas passage means (4) of the third group is between 0 and 200 mm, preferably between 0 and 100 mm,
    b) the length L2 between a gas passage means (4) of the third group and an outer gas passage means is between 0 and 200 mm, preferably between 0 and 100 mm,
    c) the length L3 between the edge of the tray and the outer gas passage means is between 0 and 200 mm, preferably between 0 and 100 mm, and
    d) the length of a compartment Z is between 20 and 2000 mm and is preferably less than

$$\frac{50}{2\tan\theta} \ (\text{mm}),$$

    $\theta$ being the maximum angle of inclination of the tray.

8. Tray according to one of the preceding claims, wherein the gas passage means (4) are parallelepipedal.

9. Offshore distributor tray (1) according to one of the preceding claims, wherein the liquid passage means (5) are chimneys equipped with at least one perforation, said chimneys projecting from one of the surfaces of said tray (2).

10. Offshore gas/liquid contacting column (3), wherein two fluids are brought into contact using at least one gas/liquid contactor (3), said column comprising at least one first inlet for a liquid fluid, at least one second inlet for a gaseous fluid, at least one first outlet for a gaseous fluid and at least one second outlet for a liquid fluid, **characterized in that** said column (1) comprises a distributor tray (2) according to one of the preceding claims in order that the fluids can be distributed on said contactor (3).

11. Unit for gas processing and/or $CO_2$ capture by scrubbing of the gas using an absorbent solution, in particular containing amines, **characterized in that** said unit comprises at least one column (1) according to Claim 10 in order to permit exchanges between the gas and the absorbent solution

12. Unit for distilling and/or dehydrating a gas, **characterized in that** said unit comprises at least one column (1) according to Claim 10 in order to permit exchanges between the gas and a liquid.

13. Offshore floating barge, in particular for recovery of hydrocarbons, **characterized in that** it comprises a gas processing and/or $CO_2$ capture unit according to Claim 11, or a distillation and/or dehydration unit according to Claim 12, in order to clean the produced gases.

14. Method for manufacturing a tray according to one of Claims 1 to 9, involving the following steps:

a) defining an index IQ of imbalance of said tray (2):

$$IQ\% = \frac{U_{L1} - U_{L2}}{(U_{L1} + U_{L2})/2} \, 100$$

where $U_{L1}$ and $U_{L2}$ are the velocities of the liquid leaving the tray at two diametrically opposite ends of the tray;
b) choosing a maximum index of imbalance of said tray (2) and an angle $\theta$ of maximum inclination of said tray relative to the horizontal;
c) determining the spacings (L1, L2, L3) between said gas passage means (4) and a distance (Z) between the edge of the tray and the gas passage means (4) that permits said maximum index of imbalance to be obtained by determining said velocities $U_{L1}$ and $U_{L2}$ as a function of the height h of the liquid guard, h being a function of the angle $\theta$ of inclination of the tray and of said spacings; and
d) positioning said walls in accordance with the spacings.

**Figure 1**

**Figure 2**

**Figure 3**

Figure 4

Figure 5

Figure 6

Figure 7a)

Figure 7b)

**Figure 7c)**

EP 2 653 203 B1

Figure 8a)

Figure 8b)

17

Figure 8c)

**Figure 9a)**

**Figure 9b)**

Figure 9c)

**Figure 10**

$U_{L1} \approx U_{L2}$

**Figure 11**

Figure 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6338774 B
- US 2004020238 A
- US 6149136 A
- US 5752538 A
- FR 2771018 A
- FR 2771019 A
- US 5132055 A

**Littérature non-brevet citée dans la description**

- **HIRT ; NICHOLS.** *JCP,* 1981, vol. 39, 201-225